# FASCICULE DE BREVET EUROPEEN

(11) **EP 1 344 461 B1**
(45) Date de publication et mention de la délivrance du brevet: **01.02.2006**
(21) Numéro de dépôt: 03356045.9
(22) Date de dépôt: 13.03.2003
(51) Int. Cl.: A23L 1/48, B65B 55/14, A23L 1/16, A23B 4/005

(54) **Procédé d'obtention d'un plat prêt à consommer**
Verfahren zur Herstellung eines essfertigen Gerichts
Process to obtain a ready to eat meal

(30) Priorité: 13.03.2002 FR 0203128
(43) Date de publication de la demande: 17.09.2003
(73) Titulaire: Atria, 69610 Souzy (FR)
(72) Inventeur: Cherblanc, Franck, 69670 Vaugneray (FR); Cherblanc, Eric, 69510 Thurins (FR)
(74) Mandataire: Guerre, Dominique

(56) Documents cités:
- EP-A- 0 230 978
- WO-A-93/02925
- GB-A- 616 789
- US-A- 4 181 072
- US-A- 4 218 486

## Description

La présente invention concerne un procédé simple et rapide d'obtention d'un plat prêt à consommer, éventuellement après réchauffage, et possédant une longue durée de conservation, par traitement d'un produit alimentaire, à l'état cru, précuit ou déshydraté.

De nombreux procédés de préparation ont déjà été décrits, à la recherche d'un bon compromis entre les qualités organoleptiques et biologiques du produit, en particulier quand le plat n'est pas consommé dans les trois ou quatre jours suivant son obtention et qu'il doit être conservé.

Ainsi, US-A-5,904,946 décrit un procédé de préparation d'un plat cuisiné emballé, consistant à disposer dans un contenant un produit cuit, garni et refroidi, à sceller le contenant et à porter l'ensemble à une température d'environ 130°C. Après refroidissement à une température inférieure à 9°C, le produit peut être conservé au réfrigérateur pendant au moins trois mois.

De la même manière, selon le brevet français 1 326 958, on obtient un plat de légumes secs prêt à consommer, en procédant à la cuisson et l'égouttage des légumes secs, éventuellement à leur assaisonnement, en les disposant dans un contenant et en les fermant hermétiquement par scellement sous vide. L'ensemble est ensuite soumis à une stérilisation dans un autoclave. Le plat ainsi obtenu présente une longue durée de conservation.

Le certificat d'addition 82 177 apporté au brevet français 1 326 958 ci-dessus, décrit un procédé d'obtention d'un plat de légumes secs prêt à consommer, selon lequel on dispose dans un contenant en plastique les légumes secs, de l'eau, et un assaisonnement, et après scellement du contenant, on place l'ensemble dans un autoclave, à la température d'ébullition de l'eau, pour effectuer la cuisson des légumes.

Le procédé décrit dans EP-A-0 230 978 consiste à introduire dans un contenant le produit cuisiné à une température supérieure à 60°C, de préférence de 80 à 85°C, à éventuellement insuffler un gaz frais dans le contenant pour chasser l'air chaud et humide, puis à sceller le contenant, et enfin à soumettre l'ensemble à un choc thermique par abaissement rapide de la température jusqu'à environ 6°C.

Certains de ces procédés nécessitent une étape de cuisson et/ou stérilisation en autoclave. Cette méthode a pour inconvénient de ne pas porter tous les produits disposés dans les contenants et introduits dans l'autoclave à une même température, de sorte que la cuisson d'un contenant à un autre, voire même au sein du même contenant n'est pas uniforme. Il en ressort donc que pour un même produit de départ, certains plats seront trop cuits, d'autres le seront insuffisamment, au risque supplémentaire de ne pas stériliser la totalité des plats.

D'autres de ces procédés, en recourant à une étape préalable de cuisson du produit, comprennent un contrôle de la température et de l'état d'avancement de la cuisson dudit produit, en particulier quand le produit est fragile, du type pâtes farcies.

Ainsi, le document GB-616,789 propose un procédé d'obtention d'un produit alimentaire stérilisé et conditionné dans un contenant souple en un matériau résistant à des températures élevées, comprenant une première étape dans laquelle, soit on cuit le produit et on le place, chaud, dans ledit contenant, soit on place le produit dans ledit contenant et on porte l'ensemble à la température de cuisson du produit, puis une seconde étape dans laquelle on ferme le contenant, immédiatement suivie d'une dernière étape selon laquelle on refroidit l'ensemble provoquant ainsi la rétractation des parois du contenant entourant le volume resté vide.

Tous ces procédés comprennent une étape de précuisson ou de cuisson, qui parfois assure simultanément la stérilisation, nécessitant un poste de cuisson avec des moyens de chauffage et de contrôle du temps de cuisson.

Selon la présente invention, il est proposé d'obtenir un plat prêt à consommer, pasteurisé et conditionné dans un contenant étanche, en limitant le nombre d'étapes du procédé par rapport aux procédés connus, dans le but de réduire les temps et coûts de fabrication.

En cherchant à simplifier davantage ces procédés, notamment par la suppression de l'étape de chauffage en autoclave, par la limitation des cycles de chauffage et refroidissement et de la manipulation du produit, la Demanderesse a mis au point un procédé d'obtention rapide d'un plat prêt à consommer à partir d'un produit alimentaire à cuire ou à hydrater, dont la fermeture étanche dans un contenant, dans des conditions qui seront décrites ci-après, permet d'en réaliser simultanément et la cuisson et la pasteurisation.

Le plat obtenu peut être conservé plusieurs mois au réfrigérateur, soit à une température inférieure à 8°C, et peut être consommé en l'état, éventuellement accompagné d'un assaisonnement et/ou réchauffé.

Les qualités microbiologiques du plat ne sont pas altérées par le stockage du plat préparé, à une température inférieure à 8°C : comme un exemple l'illustrera ci-après, le développement des microorganismes est sensiblement nul et reste toujours en deçà d'un seuil prédéterminé, satisfaisant les normes en vigueur pour cette gamme de produits.

On constate par ailleurs, que la texture des pâtes ne se dégradent pas, que les qualités organoleptiques du produit ne varient pas, et que ni le traitement, ni le stockage du produit obtenu, ne modifie le goût de la sauce qui a permis de réaliser la cuisson du produit et qui l'accompagne dans sa dégustation.

Le procédé selon l'invention comprend les étapes suivantes :
on dispose ledit produit à cuire ou à hydrater, à l'état cru, précuit ou déshydraté, dans un contenant,
on verse sur ledit produit un liquide chaud, à une température comprise entre 60 et 90°C, selon lequel on réalise simultanément la cuisson et la pasteurisation dudit produit
on scelle le contenant de manière étanche, et
on laisse refroidir le produit ainsi traité.

On observe que, dans un temps variable selon la nature du produit, celui-ci a cuit dans l'emballage en absorbant une partie du liquide et de manière surprenante, ce mode de cuisson assure aussi la pasteurisation du produit, conférant audit plat préparé une durée de conservation dans un réfrigérateur, pouvant atteindre plusieurs semaines, voire plusieurs mois, sans altération biologique. Selon l'invention, on supprime ainsi tout contrôle de la cuisson du produit qui s'effectue progressivement par absorption du liquide. Le procédé de l'invention présente même l'avantage de déterminer à l'oeil nu le stade de cuisson du produit dans son contenant, celle-ci ne s'effectuant que par absorption du liquide.

L'invention est ci-après plus spécifiquement décrite en application à des produits amylacés, mais elle est en fait adaptée à tout produit dont la cuisson est susceptible d'être réalisée par absorption d'eau, par exemple les légumes secs, ainsi qu'à tout produit à hydrater ou réhydrater, obtenu par dessiccation, lyophilisation ou déshydratation, comme des flocons de pommes de terre, d'oignons, et autres flocons de légumes.

Ainsi, le produit peut être un produit amylacé. Il est alors avantageusement choisi parmi les pâtes fraîches ou industrielles, le riz, le blé, les pommes de terre, les produits amylacés déshydratés.

Mais il peut aussi être une préparation instantanée, du type purée, potage.

En fonction de la nature du produit et de son temps de cuisson, il aura pu subir une cuisson préalable avant d'être disposé dans le contenant.

Comme indiqué ci-dessus, après avoir disposé le produit à traiter dans un contenant, on verse un liquide chaud. Pour atteindre à la fois cuisson et pasteurisation, la température du liquide est comprise entre 60 et 90°C, et mieux encore elle est supérieure à 70°C. Sa détermination dépend du produit à cuire ou hydrater.

Ce liquide est avantageusement de l'eau, un bouillon, un jus, une purée, par exemple purée de légumes, une sauce, type sauce tomate, sauce au fromage, ou un mélange cuisiné.

Lorsque le liquide n'est ni de l'eau, ni un bouillon, il est avantageusement étendu avec de l'eau éventuellement assaisonnée, pour assurer la cuisson du produit.

Selon une variante du procédé de l'invention, le liquide chaud est de l'eau, et, après avoir versé l'eau sur le produit et avant de sceller le contenant, on verse une sauce ou un mélange cuisiné sur le produit.

Dans une autre variante, le liquide chaud est de l'eau, et, avant de verser l'eau sur le produit, on verse une sauce ou un mélange cuisiné sur le produit.

La sauce ou le mélange cuisiné ainsi versé selon ces variantes est froid ou chaud, et éventuellement pasteurisé.

La quantité d'eau versée directement sur le produit, et la sauce le cas échéant, est sensiblement la même que celle absorbée lors de la cuisson à l'eau classique du même produit. La Demanderesse a néanmoins observé que, dans certains cas, en particulier pour la cuisson de pâtes farcies, la quantité nécessaire pouvait être légèrement supérieure à celle absorbée par cuisson à l'eau.

Dès que le liquide chaud est versé, la cuisson et la pasteurisation du produit commencent. La cuisson se poursuit après fermeture du contenant, avant et pendant le refroidissement, tant que la température reste suffisante.

Le contenant est avantageusement une barquette plastique. Son volume est adapté au nombre de parts pour lequel le plat a été préparé. Si le produit est conditionné en part individuelle, le volume du contenant sera de préférence de l'ordre de 350 ml. Une fois le contenant rempli, il est sans délai scellé de manière étanche, par un couvercle, un film, un opercule ou tout autre moyen bien connu de l'homme du métier.

Selon une variante du procédé particulièrement destinée à la cuisson et stérilisation de produit à cuisson longue, le contenant est composé d'un matériau isolant, permettant le maintien sur la durée nécessaire à la cuisson, de la température du liquide chaud versé dans le contenant.

D'après une variante du procédé de l'invention, celui-ci peut comprendre une étape supplémentaire selon laquelle, avant de sceller le contenant ou au cours du scellement du contenant, on injecte dans le contenant un gaz alimentaire. Celui-ci sera choisi de manière à ne pas altérer ni la saveur, ni l'aspect du produit traité. En fonction de sa nature, il pourra par exemple contribuer à l'avancement de la cuisson du produit, ou favoriser le vide dans le contenant.

Ce gaz est préférentiellement choisi parmi la vapeur d'eau, l'azote, le gaz carbonique et les mélanges de ceux-ci.

Après la fermeture hermétique du contenant et la cuisson du produit, on procède à un refroidissement du produit traité par abaissement à une température inférieure à 8°C.

Le plat ainsi obtenu peut être conservé au froid positif, au réfrigérateur ou chambre froide, ou bien il peut être congelé.

Selon que le plat est destiné à être conservé au froid positif ou à être congelé, la température est abaissée à une valeur comprise entre 0 et 8°C ou bien à une valeur inférieure à 0°C, de préférence comprise entre -15 et - 20°C, et mieux encore d'environ -18°C.

Avantageusement, on procède à un refroidissement rapide dudit produit, après absorption du liquide chaud. A cet effet, une valeur de température comprise entre 0 à 8°C est atteinte au coeur du produit, en une période de préférence inférieure à 90 minutes, si le produit est stocké en froid positif, ou bien une valeur de température comprise entre -15 et -20°C est obtenue au coeur du produit, en une période de préférence inférieure à quatre heures, si le produit est congelé.

Le procédé de l'invention peut être mis en oeuvre dans une chaîne de production automatisée.

### Exemple 1:

Dans une cuve de chauffe, on mélange 165 kg de sauce tomate cuisinée et 60 litres d'eau salée, et on chauffe l'ensemble à une température d'environ 85°C.

La cuve de chauffe est reliée à un doseur, placé au-dessus d'une ligne de conditionnement.

Sur cette ligne de conditionnement, on dispose manuellement ou à l'aide d'un doseur, 75 g de pâtes fraîches de type cappelleti ou ravioli, dans un emballage plastique tel qu'une barquette, d'un volume de 350 ml. On dose 225 g de la sauce tomate à 85°C que l'on verse sur les pâtes. On procède immédiatement au scellage de l'emballage à l'aide d'un film.

L'emballage ainsi garni est laissé à température ambiante, pendant 15 minutes.

Le produit est ensuite soumis à une phase de refroidissement rapide en 15 à 30 minutes, pour atteindre au coeur du produit une température comprise entre 0 et 4°C.

Sur une durée de deux mois de stockage en froid positif à environ 5°C, on a périodiquement évalué les qualités microbiologiques du plat ainsi préparé. A cet effet, on a appliqué les normes NF V08-051 et V08-100 pour déterminer la flore totale aérobie mésophile. Sur toute la durée précitée, la valeur d'environ 1 000 germes/gramme est restée très inférieure au seuil maximal fixé à 300 000 germes/g.

Par ailleurs, l'aspect et la saveur du produit sont restés intacts.

## Revendications

1. Procédé d'obtention d'un plat prêt à consommer, à partir d'un produit alimentaire à cuire ou à hydrater; ledit procédé comprenant les étapes selon lesqueiles :
on dispose ledit produit, à l'état cru, précuit ou déshydraté, dans un contenant,
on verse sur ledit produit un liquide chaud à une température comprise entre 60 et 90°C, selon lequel on réalise simultanément la cuisson et la pasteurisation dudit produit
on scelle le contenant de manière étanche, et
on procède au refroidissement du produit ainsi traité.

2. Procédé selon la revendication 1, **caractérisé en ce que** le produit est un produit amylacé.

3. Procédé selon la revendication 2, **caractérisé en ce que** le produit amylacé est choisi parmi les pâtes fraîches ou industrielles, le riz, le blé, les pommes de terre, les produits amylacés déshydratés.

4. Procédé selon la revendication 1, **caractérisé en ce que** le produit est une préparation instantanée.

5. Procédé selon l'une quelconque des revendications 1 à 4, **caractérisé en ce que** ledit liquide chaud est à une température d'au moins 70°C.

6. Procédé selon l'une quelconque des revendications 1 à 5, **caractérisé en ce que** le liquide est de l'eau, un bouillon, un jus, une purée, une sauce ou un mélange cuisiné.

7. Procédé selon l'une quelconque des revendications 1 à 6, **caractérisé en ce que** le liquide chaud est de l'eau, et **en ce que**, après avoir versé l'eau sur le produit et avant de sceller le contenant, on verse une sauce ou un mélange cuisiné sur le produit.

8. Procédé selon l'une quelconque des revendications 1 à 6, **caractérisé en ce que** le liquide chaud est de l'eau, et **en ce que**, avant de verser l'eau sur le produit, on verse une sauce ou un mélange cuisiné sur le produit.

9. Procédé selon la revendication 7 ou 8, **caractérisé en ce que** la sauce ou le mélange cuisiné est froid ou chaud, et éventuellement pasteurisé.

10. Procédé selon l'une quelconque des revendications 1 à 9, **caractérisé en ce qu'**on procède à un refroidissement du produit traité par abaissement à une température inférieure à 8°C.

11. Procédé selon la revendication 10, **caractérisé en ce que** la température est abaissée à une valeur comprise entre 0 et 8°C.

12. Procédé selon la revendication 10, **caractérisé en ce que** la température est abaissée à une valeur inférieure à 0°C, de préférence comprise entre -15 et -20 °C.

13. Procédé selon l'une quelconque des revendications 1 à 12, **caractérisé en ce que**, avant de sceller le contenant ou au cours du scellement du contenant, on injecte dans le contenant un gaz alimentaire.

14. Procédé selon la revendication 13, **caractérisé en ce que** le gaz est choisi parmi la vapeur d'eau, l'azote, le gaz carbonique et les mélanges de ceux-ci.

15. Procédé selon l'une quelconque des revendications 1 à 14, **caractérisé en ce que** le contenant est isolant.

## Claims

1. Process to obtain a ready-to-eat meal, starting from a food product to be cooked or hydrated, said process comprising the steps in which:
product in the raw, precooked or dehydrated state is placed into a container,
a hot liquid at a temperature of between 60 and 90°C is poured onto said product, thereby simultaneously cooking and pasteurizing said product,
the container is sealed tightly, and
the product thus treated is subsequently cooled.

2. Process according to Claim 1, **characterized in that** the product is a starchy product.

3. Process according to Claim 2, **characterized in that** the starchy product is selected among fresh pasta, factory-made pasta, rice, wheat, potatoes, dehydrated starchy products.

4. Process according to Claim 1, **characterized in that** the product is a instant product.

5. Process according to any of Claims 1 to 4, **characterized in that** said hot liquid has a temperature of at least 70°C.

6. Process according to any of Claims 1 to 5, **characterized in that** the liquid is water, a broth, a gravy, a puree, a sauce or a cooked mixture.

7. Process according to any of Claims 1 to 6, **characterized in that** the hot liquid is water and **in that**, after having poured the water onto the product and before sealing the container, a sauce or a cooked mixture is poured on the product.

8. Process according to any of Claims 1 to 6, **characterized in that** the hot liquid is water and **in that** a sauce or a cooked mixture is poured onto the product before pouring the water onto the product.

9. Process according to Claim 7 or 8, **characterized in that** the sauce or the cooked mixture is cold or hot and, if appropriate, pasteurized.

10. Process according to any of Claims 1 to 9, **characterized in that** the treated product is subsequently cooled by lowering it to a temperature of less than 8°C.

11. Process according to Claim 10, **characterized in that** the temperature is lowered to a value of between 0 and 8°C.

12. Process according to Claim 10, **characterized in that** the temperature is lowered to a value of less than 0°C, preferably to between -15 and -20°C.

13. Process according to any of Claims 1 to 12, **characterized in that** an alimentary gas is injected into the container before or during the sealing of the container.

14. Process according to Claim 13, **characterized in that** the gas is selected among steam, nitrogen, carbon dioxide and their mixtures.

15. Process according to any of Claims 1 to 14, **characterized in that** the container is insulating.

## Patentansprüche

1. Verfahren zur Herstellung eines esstertigen Gerichts ausgehend von einem zu kochenden oder zu hydratisierenden Nahrungsmittelprodukt, wobei das Verfahren die folgenden Schritte umfaßt:
man gibt das Produkt im rohen, vorgekochten oder entwässerten Zustand in ein Behältnis,
man gießt eine heiße Flüssigkeit mit einer Temperatur zwischen 60 und 90°C auf das Produkt, wodurch man dieses Produkt gleichzeitig gart und pasteurisiert,
man verschließt das Behältnis dicht und
man kühlt anschließend das so behandelte Produkt.

2. Verfahren nach Anspruch 1, **dadurch gekennzeichnet, dass** es sich bei dem Produkt um ein stärkehaltiges Produkt handelt.

3. verfahren nach Anspruch 2, **dadurch gekennzeichnet, dass** das stärkehaltige Produkt aus der Reihe frische Teigwaren, industriell gefertigte Teigwaren, Reis, Weizen, Kartoffeln bzw. entwässerte stärkehaltige Produkte stammt.

4. verfahren nach Anspruch 1, **dadurch gekennzeichnet, dass** es sich bei dem Produkt um ein InstantProdukt handelt.

5. Verfahren nach einem der Ansprüche 1 bis 4, **dadurch gekennzeichnet, dass** die heiße Flüssigkeit eine Temperatur von mindestens 70°C aufweist.

6. Verfahren nach einem der Ansprüche 1 bis 5, **dadurch gekennzeichnet, dass** es sich bei der Flüssigkeit um Wasser, eine Brühe, einen Saft, ein Püree, eine Soße oder eine gekochte Mischung handelt.

7. Verfahren nach einem der Ansprüche 1 bis 6, **dadurch gekennzeichnet, dass** es sich bei der heißen Flüssigkeit um Wasser handelt, sowie **dadurch**, dass man nachdem man das Wasser auf das Produkt gegossen hat und bevor man den Inhalt dicht abschließt, eine Soße oder eine gekochte Mischung auf das Produkt gießt.

8. verfahren nach einem der Ansprüche 1 bis 6, **dadurch gekennzeichnet, dass** es sich bei der heißen Flüssigkeit um Wasser handelt, sowie **dadurch**, dass man bevor man das wasser auf das Produkt gegossen hat, eine Soße oder eine gekochte Mischung auf das Produkt gießt.

9. Verfahren nach Anspruch 7 oder 8, **dadurch gekennzeichnet, dass** die Soße oder gekochte Mischung kalt oder heiß und gegebenenfalls pasteurisiert ist.

10. Verfahren nach einem der Ansprüche 1 bis 9, **dadurch gekennzeichnet, dass** man anschließend das behandelte Produkt **dadurch** kühlt, dass man die Temperatur unter 8°C senkt.

11. verfahren nach Anspruch 10, **dadurch gekennzeichnet, dass** die Temperatur auf einen Wert zwischen 0 und 8°C gesenkt wird.

12. verfahren nach Anspruch 10, **dadurch gekennzeichnet, dass** die Temperatur auf einen Wert unter 0°C, vorzugsweise zwischen -15 und -20°C, gesenkt wird.

13. Verfahren nach einem der Ansprüche 1 bis 12, **dadurch gekennzeichnet, dass** man bevor oder während man das Behältnis dicht abschließt, ein Lebensmittelgas in das Behältnis einbläst.

14. Verfahren nach Anspruch 13, **dadurch gekennzeichnet, dass** das Gas aus der Reihe Wasserdampf, Stickstoff, Kohlensäure und deren Mischungen stammt.

15. Verfahren nach einem der Ansprüche 1 bis 14, **dadurch gekennzeichnet, dass** das Behältnis isolierend ist.
